# EUROPÄISCHE PATENTSCHRIFT

(11) **EP 1 861 293 B1**
(45) Veröffentlichungstag und Bekanntmachung des Hinweises auf die Patenterteilung: **16.07.2008**
(21) Anmeldenummer: 06707808.9
(22) Anmeldetag: 24.01.2006
(51) Int. Cl.: B60R 21/01

(54) **VERFAHREN UND VORRICHTUNG ZUM SCHÄTZEN VON MINDESTENS EINEM MERKMAL**
METHOD AND DEVICE FOR ASSESSING AT LEAST ONE CHARACTERISTIC
PROCEDE ET DISPOSITIF POUR EVALUER AU MOINS UNE CARACTERISTIQUE

(30) Priorität: 11.03.2005 DE 102005011244
(43) Veröffentlichungstag der Anmeldung: 05.12.2007
(73) Patentinhaber: ROBERT BOSCH GMBH, 70442 Stuttgart (DE)
(72) Erfinder: THEISEN, Marc, 74354 Besigheim (DE)
(86) Internationale Anmeldenummer: PCT/EP2006/050390
(87) Internationale Veröffentlichungsnummer: WO 2006/094857

(56) Entgegenhaltungen:
- WO-A-20/05044636
- DE-A1- 10 155 659

## Beschreibung

### Stand der Technik

Die Erfindung geht aus von einem Verfahren zum Schätzen von mindestens einem Merkmal nach der Gattung des unabhängigen Patentanspruchs 1 oder von einer zugehörigen Vorrichtung.

Bei Insassenschutzsystemen wird bei Entscheidungen über die Auslösung von Insassenschutzmitteln ein Zeitpunkt berechnet, an welchem ein Kontakt bzw. ein Aufprall des eigenen Fahrzeugs mit einem anderen Objekt stattgefunden hat. Der Zeitpunkt des Kontakts bzw. des Aufpralls wird nachfolgend auch als tatsächlicher Kontaktzeitpunkt bezeichnet. Der durch die Berechnung ermittelte Zeitpunkt wird als berechneter Kontaktzeitpunkt bezeichnet. Der berechnete Kontaktzeitpunkt kann sich, beispielsweise aufgrund von Messtoleranzen, vom tatsächlichen Kontaktzeitpunkt unterscheiden.

Aus DE 101 55 659 A1 ist es bekannt, ein Verfahren zum Bestimmen der für das Auslösen einer passiven Sicherheitseinrichtung in einem Fahrzeug maßgeblichen Crashphase vorzusehen, das zwei Fensterintegrale nutzt, die die Integration eines in Fahrzeuglängsrichtung erfassten Beschleunigungssignals betreffen. Die Fensterintegrale unterscheiden sich in der Integrationszeit. Der Beginn der ersten Crashphase wird durch einen Schwellwertvergleich dieser Fensterintegrale mit einem vorgegebenen Schweilwert ermittelt.

Aus WO 2005/044636 A1 ist bekannt, ein

Verfahren zum Schätzen von mindestens einem Merkmal, welches aus mindestens einem Basismerkmal abgeleitet wird und welches zur Erzeugung eines Auslösesignals für eine Insassenschutzvorrichtung ausgewertet wird, wobei nach einem erfolgten Aufprall zu einem ersten Zeilpunkt ein theoretischer Konlaktzellpunkt berechnet wird, wobei der Verlauf des mindestens einen abgeleiteten Merkmals In einer Zeitspanne zwischen dem berechneten Kontaktzeitpunkt und dem ersten Zeitpunkt im Nachhinein ermittelt wird.

Aus dem Stand der Technik sind Verfahren bekannt, bei welchen der berechnete Kontaktzeitpunkt durch einen Zeitpunkt festgelegt wird, an welchem mindestens eine vorgegebene Bedingung erfüllt ist. Eine solche Bedingung kann beispielsweise darin bestehen, dass ein Beschleunigungssignal oder ein erstes oder ein zweites Fensterintegral einen vorgegebenen Wert überschreitet. Für diesen Fall stimmen ein Zeitpunkt, an welchem der Kontaktzeitpunkt berechnet wird, und der berechnete Kontaktzeitpunkt überein. Ab dem berechneten Kontaktzeitpunkt wird dann mindestens ein Merkmal berechnet bzw. abgeleitet, welches auf mindestens einem Sensorsignal beruht. Bei dieser Berechnungsart wird der Zeitraum zwischen dem tatsächlichen Kontaktzeitpunkt und dem berechneten Kontaktzeitpunkt für die Berechnung der Merkmale nicht berücksichtigt.

Weiterhin sind aus dem Stand der Technik Verfahren zur rückwärtigen Berechnung des Kontaktzeitpunkts bekannt. Hier wird an einem aktuellen Zeitpunkt ermittelt, wie lange der Kontaktzeitpunkt zurückliegt. Mit solchen Verfahren lässt sich der tatsächliche Kontaktzeitpunkt genauer ermitteln.

### Vorteile der Erfindung

Das erfindungsgemäße Verfahren zum Schätzen von mindestens einem Merkmal mit den Merkmalen des unabhängigen Patentanspruchs 1 hat demgegenüber den Vorteil, dass nach einem erfolgten Aufprall zu einem ersten Zeitpunkt ein theoretischer Kontaktzeitpunkt berechnet wird und der Verlauf des mindestens einen abgeleiteten Merkmals in einer Zeitspanne zwischen dem berechneten Kontaktzeitpunkt und dem ersten Zeitpunkt, an welchem der Kontaktzeitpunkt berechnet wird, im Nachhinein ermittelt wird. Dadurch kann der Merkmalsverlauf bei der Auslöseentscheidung von Insassenschutzmitteln ab einem Zeitpunkt berücksichtigt werden, welcher näher am tatsächlichen Kontaktzeitpunkt liegt als bei den bekannten Verfahren oder mit dem tatsächlichen Kontaktzeitpunkt übereinstimmt.

Die Berücksichtigung des geschätzten Merkmalsverlaufs ab einem früheren Zeitpunkt, ermöglicht es in vorteilhafter Weise einem nachfolgenden Verfahren eine sichere Entscheidung bei der Erzeugung eines Auslösesignals für die Insassenschutzmittel zu treffen und unnötige Falschauslösungen zu vermeiden. Dadurch wird ein optimaler Schutz der Insassen bei gleichzeitiger Minimierung der Kosten gewährleistet, die durch eine ungewollte Auslösung der Insassenschutzvorrichtung entstehen können. Das erfindungsgemäße Verfahren entscheidet in vorteilhafter Weise ausgehend von den verfügbaren Sensorsignalen unter Einbeziehung des geschätzten Merkmalsverlaufs zwischen dem berechneten Kontaktzeitpunkt und dem Zeitpunkt der Berechnung des Kontaktzeitpunkts, ob in der vorliegenden Situation nach einer erkannte Kollision mit einem Objekt eine Auslösung bzw. eine Aktivierung der Insassenschutzvorrichtung erforderlich ist oder nicht.

Die erfindungsgemäße Vorrichtung zum Schätzen von mindestens einem Merkmal mit den Merkmalen des unabhängigen Patentanspruchs 10 umfasst die erforderlichen Mittel zur Durchführung des erfindungsgemäßen Verfahrens zum Schätzen von mindestens einem Merkmal.

Durch die in den abhängigen Ansprüchen aufgeführten Maßnahmen und Weiterbildungen sind vorteilhafte Verbesserungen des im unabhängigen Patentanspruch 1 angegebenen Verfahrens zum Schätzen von mindestens einem Merkmal und der im unabhängigen Patentanspruch 10 angegebenen zugehörigen Vorrichtung möglich.

Besonders vorteilhaft ist, dass zur Schätzung des mindestens einen Merkmalverlaufs ein Wert des mindestens einen Basismerkmals zum ersten Zeitpunkt berücksichtigt wird Dies ermöglicht eine einfache und schnelle Umsetzung des erfindungsgemäßen Verfahrens.

Der Merkmalsverlauf kann beispielsweise ausgehend von dem Wert des mindestens einen Basismerkmals zum ersten Zeitpunkt durch eine Parabel angenähert werden, welche zwischen den berechneten Kontaktzeitpunkt und den ersten Zeitpunkt gelegt wird.

Zur Schätzung des mindestens einen Merkmalverlaufs können zusätzliche Werte des mindestens einen Basismerkmals, beispielsweise Abtastwerte des mindestens einen Basismerkmals, aus einer vorgegebenen abgelaufenen Zeitspanne berücksichtigt werden, wodurch die Genauigkeit der Schätzung erhöht wird

Zusätzlich oder alternativ kann der Merkmalsverlauf basierend auf mindestens einem Wert der Basismerkmale gestützt auf ein Modell geschätzt werden. Dadurch kann in vorteilhafter Weise der Merkmalsverlauf schneller und genauer geschätzt werden.

Zusätzlich oder alternativ kann das mindestens eine Merkmal basierend auf ein gefenstertes Merkmal geschätzt werden. Der Fensterzeitraum kann eine feste definiert Länge aufweisen oder eine variable Länge aufweisen, welche entsprechend der Zeitspanne zwischen dem berechneten Kontaktzeitpunkt und dem ersten Zeitpunkt verlängert oder verkürzt wird.

Das mindestens eine Basismerkmal, aus welchem das mindestens eine Merkmal abgeleitet wird, wird beispielsweise von mindestens einer Sensoreinheit zur Verfügung gestellt. Das Basismerkmal entspricht beispielsweise einem Beschleunigungssignal oder einem Drucksignal und das mindestens eine Merkmal entspricht einem ersten und/oder einem zweiten Integral des Beschleunigungssignals bzw. des Drucksignals.

### Zeichnung

Ein Ausführungsbeispiel der Erfindung ist in der Zeichnung dargestellt und wird in der nachfolgenden Beschreibung näher erläutert.

Es zeigen
- Figur 1: ein schematisches Blockdiagramm einer Vorrichtung zur Durchführung des erfindungsgemäßen Verfahrens, und
- Figur 2: ein genaueres Blockdiagramm eines Steuergerätes aus Figur 1 zur Darstellung des erfindungsgemäßen Verfahrens.

### Beschreibung

Bei bekannten Verfahren wird ein berechneter Kontaktzeitpunkt durch einen Zeitpunkt festgelegt, an welchem mindestens eine vorgegebene Bedingung erfüllt ist. Für diesen Fall stimmen ein Zeitpunkt, an welchem der Kontaktzeitpunkt berechnet wird, und der berechnete Kontaktzeitpunkt überein. Ab dem berechneten Kontaktzeitpunkt wird dann mindestens ein Merkmal berechnet bzw. abgeleitet, welches auf mindestens einem Sensorsignal beruht. Bei dieser Berechnungsart wird der Zeitraum zwischen dem tatsächlichen Kontaktzeitpunkt und dem berechneten Kontaktzeitpunkt für die Berechnung der Merkmale nicht berücksichtigt.

Erfindungsgemäß wird nun vorgeschlagen, nach einem erfolgten Aufprall zu einem ersten Zeitpunkt den Kontaktzeitpunkt zu berechnen und den Verlauf des mindestens einen abgeleiteten Merkmals in einer Zeitspanne zwischen dem berechneten Kontaktzeitpunkt und dem ersten Zeitpunkt im Nachhinein zu ermitteln.

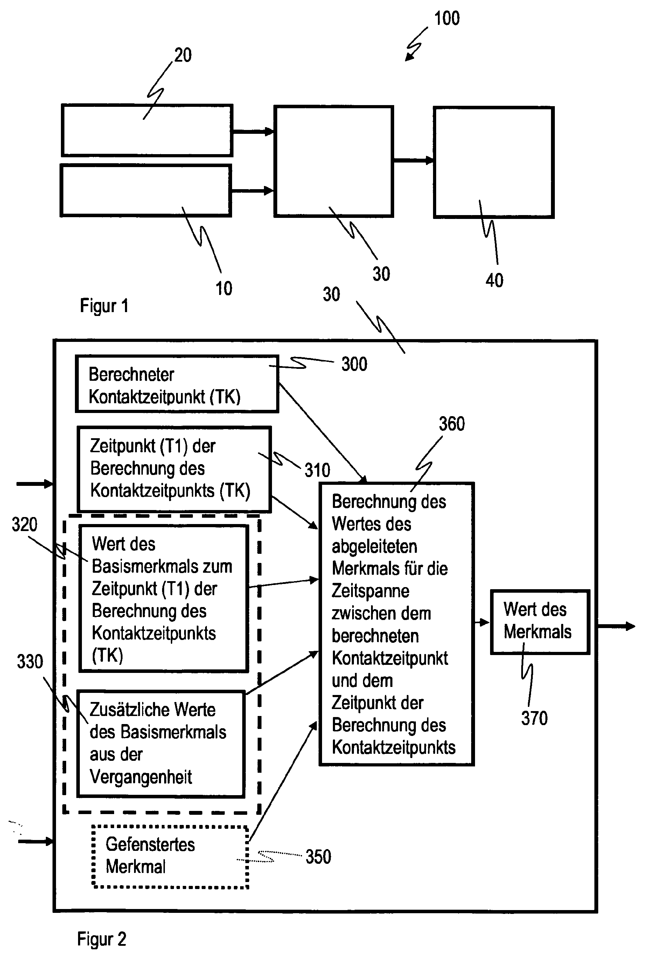

Wie aus Figur 1 ersichtlich ist, umfasst ein Ausführungsbeispiel einer Vorrichtung 100 zum Schätzen von mindestens einem Merkmal eine erste Sensoreinheit, welche beispielsweise einen als Beschleunigungssensor ausgeführten Aufprallsensor umfasst, eine zweite Sensoreinheit 20, welche beispielsweise ausgelagerte Beschleunigungssensoren, Drucksensoren usw. umfasst, eine Steuereinheit 30, welche verschiedene Signale bzw. Basismerkmale der beiden Sensoreinheiten 10, 20 empfängt, um basierend auf den zur Verfügung gestellten Sensorinfonnationen die Auslöseentscheidung für entsprechende Insassenschutzmittel 40 zu bestimmen, welche beispielsweise Airbags, Gurtstraffer usw. umfassen

Figur 2 zeigt ein genaueres Blockdiagramm des Steuergerätes 30 zur Darstellung des Ablaufs der Schätzung des mindestens einen Merkmalverlaufs. Ziel des erfindungsgemäßen Verfahrens ist es, aus Werten von Basismerkmalen, die zum aktuellen Zeitpunkt gültig sind, bzw. gegebenenfalls aus zusätzlichen Werten dieser Basismerkmale, die sich auf vergangene Zeitpunkte beziehen. Werte bzw. einen Verlauf von Merkmalen zu schätzen, die daraus abgeleitet werden. Daher wird im Block 300 nach einem Kontakt bzw. Aufprall ein Kontaktzeitpunkt TK berechnet, wobei im Block 310 der Berechnungszeitpunkt T1 der Berechnung des Kontaktzeitpunkts festgehalten wird. Bei einer ersten erfindungsgemäßen Ausführungsform wird im Block 320 der Wert eines Basismerkmals zum Zeitpunkt T1 der Berechnung des Kontaktzeitpunktes TK bestimmt. Die in den Blöcken 300 bis 310 bestimmten Werte werden einem Block 360 zur Verfügung gestellt, welcher aus den bereitgestellten Werten den Wert bzw. den Verlauf des abgeleiteten Merkmals für die Zeitspanne Δt zwischen dem berechneten theoretischen Kontaktzeitpunkt und dem Zeitpunkt T1 der Berechnung des Kontaktzeitpunktes TK berechnet bzw. schätzt. Ist beispielsweise der Wert eines ersten Merkmals, z.B. eines ersten Integrals, zum Zeitpunkt T1 bekannt, an welchem der Kontaktzeitpunkt TK berechnet worden ist, und steht das Berechnungsergebnis des Kontaktzeitpunktes TK zur Verfügung, dann kann gemäß des erfindungsgemäßen Verfahrens der Verlauf des ersten Merkmals, .d.h. des ersten Integrals, seit dem berechneten Kontaktzeitpunkt TK ermittelt bzw. geschätzt werden, z.B. indem der Verlauf als Parabel angenommen wird. Aus dem geschätzten Verlauf des ersten Merkmals bzw. des ersten Integrals kann dann auch der Wert eines zweiten Merkmals, z.B. eines zweiten Integrals, ermittelt werden, welcher zum Zeitpunkt T 1 der Berechnung des Kontaktzeitpunktes TK gültig ist.

Bei einer weiteren erfindungsgemäßen Ausführungsform schätzt der Block 360 gestützt auf einem Modell den Verlauf des abgeleiteten Merkmals, wobei die Schätzung ebenfalls auf nur einem Wert des Basismerkmals zum Zeitpunkt T1 der Berechnung des Kontaktzeitpunkts TK basieren kann.

Eine weitere erfindungsgemäße Ausführungsform bestimmt zusätzlich im Block 330 weitere Informationen zur Schätzung des Basismerkmals und stellt diese dem Block 360 zur Schätzung des abgeleiteten Merkmals zur Verfügung. Die zusätzlichen Informationen können beispielsweise zusätzliche Abtastwerte des Basismerkmals umfassen, welche z.B. alle Abtastwerte innerhalb einer vergangenen Zeitspanne einer vorher festgelegten Länge umfassen, z.B. der letzten 20 ms. Diese Ausführungsform ist durch einen gestrichelten Block dargestellt, welcher die Blöcke 320 und 330 umfasst.

Eine weitere erfindungsgemäße Ausführungsform umfasst den gepunktet dargestellten Block 350, welcher dem Block 360 zur Schätzung des abgeleiteten Merkmals ein gefenstertes Merkmal zur Annäherung des abgeleiteten Merkmals zur Verfügung stellt. Der Block 350 kann alternativ oder zusätzlich zu den Blöcken 320 und 330 vorhanden sein. So kann beispielsweise gemäß dem obigen Beispiel der gesuchte Wert des zweiten Integrals seit dem Kontaktzeitpunkt TK durch ein zweites Fensterintegral geschätzt werden, welches über einen Zeitraum mit einer fest definierten Länge berechnet wird. Optional kann bei dieser Variante die Länge des Fensterzeitraums variabel ausgeführt sein und beispielsweise entsprechend der Länge der Zeitspanne Δt, welche zwischen dem berechneten Kontaktzeitpunkt TK und dem Berechnungszeitpunkt T1 abgelaufen ist, vergrößert oder verkleinert werden.

Weitere Varianten zur Schätzung des Wertes des abgeleiteten Merkmals zum Zeitpunkt T1 der Berechnung des Kontaktzeitpunkts TK sind möglich. Der vom Block 360 berechnete Wert des Merkmals bzw. der geschätzte Merkmalsverlauf wird im Block 370 ausgegeben. Nachfolgende nicht dargestellte Verfahren zur Erzeugung von Auslösesignalen für die Insassenschutzmittel 40 berücksichtigen den im Block 370 ausgegebenen Wert des Merkmals bzw. den ausgegebenen Merkmalsverlauf bei der Ermittlung der Auslöseentscheidung, welche von der Steuereinheit 30 an die Insassenschutzmittel 40 ausgegeben wird.

## Patentansprüche

1. Verfahren zum Schätzen von mindestens einem Merkmal, welches aus mindestens einem Basismerkmal abgeleitet wird und welches zur Erzeugung eines Auslösesignals für eine Insassenschutzvorrichtung (40) ausgewertet wird, wobei nach einem erfolgten Aufprall zu einem ersten Zeitpunkt (T1) ein theoretischer Kontaktreitpunkt (TK) berechnet wird, wobei der Verlauf des mindestens einen abgeleiteten Merkmals in einer Zeitspanne (Δt) zwischen dem berechneten Kontaktreitpunkt (TK) und dem ersten Zeitpunkt (T1) im Nachhinein ermittelt wird und dieser Verlauf bei der Erzeugung des Auslösesignals berücksichtigt wird.

2. Verfahren nach Anspruch 1, **dadurch gekennzeichnet, dass** der berechnete Kontaktreitpunkt (TK) mit dem tatsächlichen Kontaktreitpunkt übereinstimmt.

3. Verfahren nach Anspruch 1 oder 2, **dadurch gekennzeichnet, dass** zur Schätzung des mindestens einen Merkmalverlaufs ein Wert des mindestens einen Basismerkmals zum ersten Zeitpunkt (T1) berücksichtigt wird.

4. Verfahren nach Anspruch 3, **dadurch gekennzeichnet, dass** der Merkmalsverlauf ausgehend von dem Wert des mindestens einen Basismerkmals zum ersten Zeitpunkt (T1) zwischen dem berechneten Kontaktzeitpunkt (TK) und dem ersten Zeitpunkt (T1) durch eine Parabel angenähert wird.

5. Verfahren nach Anspruch 3 oder 4, **dadurch gekennzeichnet, dass** zur Schätzung des mindestens einen Merkmalverlaufs zusätzliche Werte des mindestens einen Basismerkmals aus einer vorgegebenen abgelaufenen Zeitspanne berücksichtigt werden.

6. Verfahren nach einem der Ansprüche 1 bis 5, **dadurch gekennzeichnet, dass** der Merkmalsverlauf basierend auf einem Modell geschätzt wird.

7. Verfahren nach einem der Ansprüche 1 bis 6, **dadurch gekennzeichnet, dass** zur Schätzung des mindestens einen Merkmals ein gefenstertes Merkmal benutzt wird.

8. Verfahren nach Anspruch 7, **dadurch gekennzeichnet, dass** eine Fensterlänge des gefensterten Merkmals entsprechend der Zeitspanne (Δt) zwischen dem berechneten Kontaktzeitpunkt (TK) und dem ersten Zeitpunkt (T1) verlängert oder verkürzt wird.

9. Verfahren nach einem der Ansprüche 1 bis 8, **dadurch gekennzeichnet, dass** das mindestens eine Basismerkmal von mindestens einer Sensoreinheit (10, 20) zur Verfügung gestellt wird.

10. Vorrichtung zum Schätzen von mindestens einem Merkmal, insbesondere zur Durchführung des Verfahrens nach einem der Ansprüche 1 bis 9, weiches aus mindestens einem Basismerkmal ableitbar ist und weiches zur Erzeugung eines Auslösesignals für eine Insassenschutzvorrichtung (40) auswertbar ist, mit einer Steuereinheit (30), welche nach einem erfolgten Aufprall zu einem ersten Zeitpunkt (T1) einen Kontaktzeitpunkt (TK) berechnet und den Verlauf des mindestens einen abgeleiteten Merkmals in einer Zeitspanne (Δt) zwischen dem berechneten Kontaktzeitpunkt (TK) und dem ersten Zeitpunkt (T1) im Nachhinein ermittelt, wobei die Steuereinheit (30) den Verlauf bei der Erzeugung des Auslösesignals berücksichtigt.

11. Vorrichtung nach Anspruch 10, **gekennzeichnet durch** mindestens eine Sensoreinheit (10, 20), welche der Steuereinheit (30) das mindestens eine Basismerkmal zur Verfügung stellt.

## Claims

1. Method for estimating at least one characteristic which is derived from at least one basic characteristic and which is evaluated in order to generate a trigger signal for an occupant-protection apparatus (40), with a theoretical contact time (TK) being calculated after a collision has taken place at a first time (T1), with the profile of the at least one derived characteristic in a time period (Δt) between the calculated contact time (TK) and the first time (T1) being determined after the event, and this profile being taken into account when generating the trigger signal.

2. Method according to Claim 1, **characterized in that** the calculated contact time (TK) corresponds to the actual contact time.

3. Method according to Claim 1 or 2, **characterized in that** a value of the at least one basic characteristic at the first time (T1) is taken into account in order to estimate the at least one characteristic profile.

4. Method according to Claim 3, **characterized in that** the characteristic profile is approximated by a parabola between the calculated contact time (TK) and the first time (T1) on the basis of the value of the at least one basic characteristic at the first time (T1).

5. Method according to Claim 3 or 4, **characterized in that** additional values of the at least one basic characteristic from a predefined elapsed time period are taken into account in order to estimate the at least one characteristic profile.

6. Method according to one of Claims 1 to 5, **characterized in that** the characteristic profile is estimated on the basis of a model.

7. Method according to one of Claims 1 to 6, **characterized in that** a windowed characteristic is used to estimate the at least one characteristic.

8. Method according to Claim 7, **characterized in that** a window length of the windowed characteristic is increased or decreased in accordance with the time period (Δt) between the calculated contact time (TK) and the first time (T1).

9. Method according to one of Claims 1 to 8, **characterized in that** the at least one basic characteristic is provided by at least one sensor unit (10, 20).

10. Apparatus for estimating at least one characteristic, in particular for carrying out the method according to one of Claims 1 to 9, which can be derived from at least one basic characteristic and which can be evaluated in order to generate a trigger signal for an occupant-protection apparatus (40), having a control unit (30) which calculates a contact time (TK) after a collision has taken place at a first time (T1), and determines the profile of the at least one derived characteristic in a time period (Δt) between the calculated contact time (TK) and the first time (T1) after the event, with the control unit (30) taking the profile into account when generating the trigger signal.

11. Apparatus according to Claim 10, **characterized by** at least one sensor unit (10, 20) which provides the control unit (30) with the at least one basic characteristic.

## Revendications

1. Procédé pour évaluer au moins une caractéristique déduite d'au moins une caractéristique de base et exploitée pour générer un signal de déclenchement pour un dispositif de protection des passagers (40),
selon lequel, après une collision à un premier instant (T1), on calcule un instant de contact théorique (TK),
on détermine l'évolution d'au moins une caractéristique déduite dans un intervalle de temps (Δt) compris entre l'instant de contact calculé (TK) et le premier instant (T1) postérieur, et on tient compte de cette évolution pour générer le signal de déclenchement.

2. Procédé selon la revendication 1,
**caractérisé en ce que**
l'instant de contact calculé (TK) correspond à l'instant de contact effectif.

3. Procédé selon la revendication 1 ou 2,
**caractérisé en ce que**
pour évaluer au moins une évolution de caractéristique, on tient compte d'une valeur d'au moins une caractéristique de base à un premier instant (T1).

4. Procédé selon la revendication 3,
**caractérisé en ce qu'**
on fait une approximation suivant une parabole de l'évolution de la caractéristique en partant de la valeur d'au moins une caractéristique de base à un premier instant (T1) entre l'instant de contact calculé (TK) et le premier instant (T1).

5. Procédé selon la revendication 3 ou 4,
**caractérisé en ce que**
pour évaluer au moins une évolution de caractéristique, on tient compte de valeurs supplémentaires d'au moins une caractéristique de base à partir d'un intervalle de temps précédent.

6. Procédé selon l'une des revendications 1 à 5,
**caractérisé en ce qu'**
on évalue l'évolution de la caractéristique en se fondant sur un modèle.

7. Procédé selon l'une des revendications 1 à 6,
**caractérisé en ce qu'**
on utilise au moins une caractéristique à fenêtre pour évaluer au moins une caractéristique.

8. Procédé selon la revendication 7,
**caractérisé en ce qu'**
on allonge ou on raccourcit la longueur de la fenêtre pour la caractéristique mesurée selon une fenêtre en fonction de la durée (Δt) comprise entre l'instant de contact calculé (TK) et le premier instant (T1).

9. Procédé selon l'une des revendications 1 à 8,
**caractérisé en ce qu'**
au moins une unité de capteur (10, 20) fournit au moins une caractéristique de base.

10. Dispositif pour évaluer au moins une caractéristique, notamment pour exécuter le procédé selon l'une des revendications 1 à 9, qui se déduit d'au moins une caractéristique de base et qui est exploitée pour générer un signal de déclenchement pour un dispositif de protection des passagers (40), comportant une unité de commande (30) qui après la collision, calcule un instant de contact (TK) à un premier instant (T1), et détermine l'évolution d'au moins une caractéristique déduite dans une période de temps (Δt) comprise entre l'instant de contact calculé (TK) et le premier instant (T1), a posteriori, et l'unité de commande (30) tient compte de l'évolution pour générer le signal de déclenchement.

11. Dispositif selon la revendication 10,
**caractérisé par**
au moins une unité de capteur (10, 20) qui fournit à l'unité de commande (30) au moins une caractéristique de base.
